# EUROPEAN PATENT SPECIFICATION

(11) **EP 0 742 567 B1**
(45) Date of publication and mention of the grant of the patent: **11.12.2002**
(21) Application number: 96107396.2
(22) Date of filing: 09.05.1996
(51) Int. Cl.: H01G 4/40

(54) **Capacitive and inductive element**
Kapazitives und induktives Element
Elément capacitif et inductif

(30) Priority: 12.05.1995 IT TO950382
(43) Date of publication of application: 13.11.1996
(73) Proprietor: MAGNETI MARELLI POWERTRAIN S.p.A., 10138 Torino (IT)
(72) Inventor: Ciampolini, Franco, I-40100 Bologna (IT)
(74) Representative: Cerbaro, Elena, Dr.

(56) References cited:
- EP-A- 0 325 812
- DE-A- 3 909 528

## Description

The present invention relates to a capacitive and inductive element.

As is known, capacitors are formed from two metal plates separated by a dielectric. Generally the shape and parameters of the capacitor are designed in such a way as to eliminate or at least reduce undesired associated inductance and/or resistance effects due to the imperfection of the physical components. Similarly, inductors used at present are made from coils and are optimized in such a way as to eliminate undesired parasitic effects. However, there are circuits in which both capacitive and inductive characteristics are required, and in which both capacitors and inductors are therefore provided separately. This results in significantly large dimensions and complexity, which is a disadvantage in certain applications in view of the current trend towards the reduction of the dimensions of electrical circuits.

DE-A-3909528 discloses a capacitive and inductive element comprising one pair of plates formed by sheets of conductive material wound around a magnetic core of ferromagnetic material and separated from each other by dielectric material.

The object of the present invention is to provide a component having controlled characteristics which are both capacitive and inductive and which, in particular, is straightforward and cheap to implement.

According to the present invention is provided a capacitive and inductive element as recited by Claim 1.

The invention will now be described with reference to the attached drawings, which illustrate non restrictive embodiments of the invention, in which:
Figure 1 is a view from above of the present capacitive and inductive element;
Figure 2 is a lateral perspective view of the present element;
Figures 3 to 5 show simplified electrical circuits having capacitive and inductive characteristics which can be provided with the element according to the present invention;
Figures 6 and 7 show equivalent diagrams of two variants of the element shown in Fig. 4;
Figure 8 is a view from above of a further variant of the present element;
Figure 9 is a view from above of the unwound plates of a further variant of the present element; and
Figures 10 to 12 are electrical diagrams of circuits to which the present element may advantageously be applied.

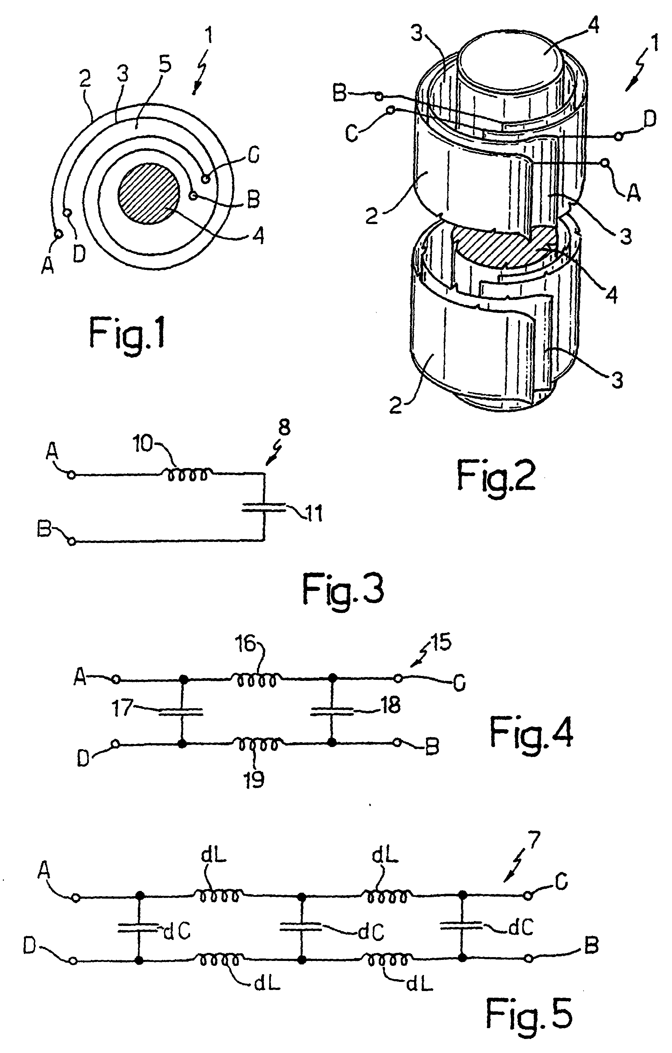

Figures 1 and 2 show an embodiment of the capacitive and inductive element 1 according to the invention. The element 1 comprises a pair of plates 2 and 3 formed by two conductive leaves or sheets (typically made of metal) wound in a spiral around a core 4 of ferromagnetic material and separated from each other and from the core 4 by a dielectric 5. The plates 2 and 3 have ends (corresponding to the ends of the two spirals visible in the view from above) forming terminals A, C and D, B respectively.

The element 1 has an equivalent circuit shown in Fig. 5, in which the terminals A-D correspond to the terminals A-D in Figs. 1 and 2. In detail, the circuit 7, of the type with distributed constants, comprises a plurality of capacitive elements dC interposed between the line delimited by the terminals A and C and the line delimited by the terminals D and B and a plurality of inductive elements dL arranged along the said lines A-C and D-B. The inductive elements dL are coupled together magnetically.

Simplified equivalent circuits of the circuit 7 with distributed constants as shown in Fig. 5 are shown in Figs. 3 and 4 and relate to the cases of circuits with two terminals and four terminals respectively. In detail, the circuit 8 shown in Fig. 3 has two terminals A and B, corresponding to the terminals A, B of the element 1, between which are arranged an inductor 10 and a capacitor 11, connected together in series.

Similarly, the circuit 15 shown in Fig. 4 has four terminals A-D, similar to the corresponding terminals of Figs. 1 and 2; an inductor 16 is arranged between the terminals A and C; a capacitor 17 is arranged between the terminals A and D; a capacitor 18 is arranged between the terminals C and B, and an inductor 19 is arranged between the terminals D and B.

The capacitive surfaces may be insulated from each other by any dielectric material suitable for the purpose.

Preferably, the element 1 is made by winding two sheets of insulating material (for example mylar), metal-coated on one side, in a spiral around the core 4. Alternatively, it is possible to make the element 1 by winding in a spiral a "sandwich" formed by two sheets of conductive material (for example tinfoil) alternating with two sheets of insulating material (for example paper or mylar), and by impregnating the resulting structure to ensure its mechanical characteristics and the characteristics of sealing from the environment.

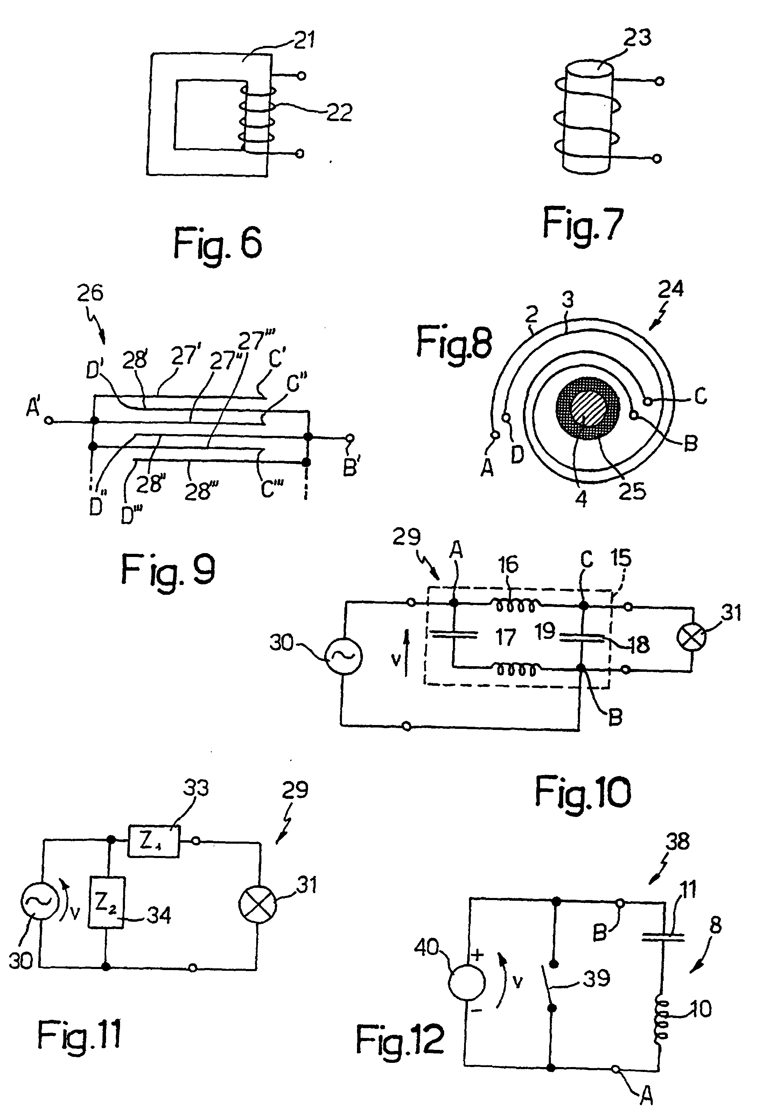

The magnetic circuit of the element 1 may be open or closed, according to the shape of the core 4; in particular, Fig. 6 shows a typical core 21 of square shape, around one side of which are wound the plates 2 and 3 of the capacitor, shown diagrammatically in the figure as a conductor 22, forming a closed magnetic circuit. Conversely, Fig. 7 shows a magnetic core 23 of cylindrical shape, similar to that shown in Figs. 1 and 2, forming an open magnetic circuit. The magnetic core may, however, have any shape suitable for forming a closed or open circuit, for example the conventional "core pot", a coupled pair of cylindrical magnetic cores, a single C-shaped core, etc.

The magnetic circuit may be connected to other windings of the type shown, in other words formed by wound plates, or of a conventional (wire) type, thus forming a transformer with capacitive and inductive characteristics. One embodiment of a transformer element 24 of such a type, with a conventional winding around the core, is shown, for example, in Fig. 8, in which a wire winding 25 is arranged around the core 4, and the plates 2, 3 are arranged around the wire winding.

By using a plurality of magnetically coupled and interconnected devices 1, complete circuits with different characteristics can be obtained. One example is the case of a plurality of windings formed by plates connected in two groups, as shown in Fig. 9. This figure shows the flat unwound plates of a capacitive and inductive element 26, also comprising a magnetic core 4 which is not shown. This element 26 comprises a plurality of first plates 27', 27", 27'", and a plurality of second plates 28', 28", 28'". The first plates 27 are arranged side by side but separated from each other and are connected together along a first end which forms a terminal A' similar to the terminal A shown in Fig. 1 (comb structure). The second plates 28 also form a comb structure, being connected together electrically along an end which forms a terminal B' similar to the terminal B shown in Fig. 1. The plates 27, 28 are arranged so that they are interposed with each other in an interdigitated configuration, in other words in such a way that each second plate 28 is arranged between a pair of adjacent first plates 27. The unconnected ends C', C", C'" of the first plates 27 and the unconnected ends D', D", D'" of the second plates form auxiliary terminals. The solution shown in Fig. 9 enables the capacitive component between the terminals A' and B' to be increased independently of the number of wound turns in each element 26.

The capacitive and inductive element described has the following advantages. In the first place, it enables the number of components in the circuits having an equivalent circuit similar to those shown in Figs. 3-5 to be minimized, thus reducing the overall dimensions. Moreover, in the case of application to high-voltage circuits, the fact that the same insulating method is used for the capacitor and the inductor is advantageous, reducing the associated costs. By providing a single element to form the circuits shown in Figs. 3-5, the external connections can be reduced; consequently, in circuits in which high-frequency voltage and/or current components are present, the electromagnetic radiation is reduced and, in circuits in which high currents are present, the efficiency is improved. In high-voltage circuits, the reduction of the external connections also enables the efficiency to be improved and reduces the risk of discharges at the external connections.

The element described may be used as a discrete element in series L/C circuits of the type illustrated in Figs. 3-5, in resonant L/C circuits, or in resonant positive boosters, for example for starting discharge lamps.

An example of application to a positive booster of this type is shown in Fig. 10. The positive booster 29 shown in Fig. 10 comprises an alternating voltage generator 30 to which a resonant circuit 15, identical to that shown in Fig. 4 (and formed by the capacitive and inductive element 1), and a lamp 31 are connected in parallel. The resonant circuit 15, comprising the inductors 16, 19 and the capacitors 17, 18, is designed to resonate at the frequency of the alternating voltage v in the absence of a load (the lamp 31). When the load is disconnected, the voltage between the terminals C and B is limited only by the parasitic losses of the circuit, and therefore may reach very high values. When the load (the discharge lamp 31) is connected, the circuit ceases to resonate and the system may be shown schematically as in Fig. 11, in which the circuit 15 is replaced by two impedances 33, 34 with values Z₁ and Z₂, arranged between terminals A and C and terminals A and D respectively. In this circuit, the impedance Z₁ may be very low, and the impedance Z₂ may be very high. In this way, the circuit 29 can generate the high voltage necessary to start the discharge lamp 31 before the lamp is connected, but has a lower series impedance during the operation of the lamp after starting, as required, using only the component 1 for the circuit 15.

The capacitive and inductive element 1 can also be used to generate pulsed magnetic fields in the magnetic circuit, using the initial charging of the capacitor 11 (equivalent circuit 8 in Fig. 2) and its subsequent discharge. An example of the application of a circuit 38 for generating pulsed magnetic fields is shown in Fig. 12, in which the capacitive and inductive element 1 according to the invention is shown diagrammatically with the circuit 8 of Fig. 2 and is connected in parallel to a switch 39 and to a continuous voltage generator 40.

The capacitor 11 is initially charged (with the switch 39 open) at the voltage v by means of the generator 40. When the switch 39 is closed, the capacitor 11 discharges through the inductor 10, causing a high current peak and consequently a pulsed magnetic field in the core (4 in Fig. 1) of the inductor 10.

By using the incorporated capacitance of the element 1 to form the capacitor 11, it is possible to obtain high currents with low losses, and furthermore, since there are no parasitic capacitances in the winding, very low current rise times are obtained. The circuit shown may therefore be used advantageously in machines for magnetizing permanent magnets, in machines for magnetic forming and in welding machines, by coupling the magnetic circuit to a secondary (for example the winding 25 in Fig. 8).

Finally, it is clear that the capacitive and inductive element described and illustrated herein may be modified and varied without departure from the scope of protection of the present invention.

## Claims

1. Capacitive and inductive element (1) comprising at least one pair of plates (2, 3) formed by sheets of conductive material wound around a magnetic core (4) of ferromagnetic material and separated from each other by dielectric material (5); **characterized in** further comprising a plurality of first plates (27', 27", 27'") connected together at one end and a plurality of second plates (28', 28", 28'") connected together at one of their ends, each of said second plates extending between an adjacent pair of first plates, and said first and second plates being wound in a spiral around said core.

2. Capacitive and inductive element according to Claim 1, wherein said plates (2, 3) are wound in a spiral, one around the other.

3. Element according to Claim 1 or 2, wherein said core (21) has a closed shape.

4. Element according to Claim 1 or 2, wherein said core (23) has an open shape.

5. Element according to any of the preceding claims, wherein it comprises a winding (25) of conductive material extending around said magnetic core (4).

6. Element according to Claim 5, wherein said winding is of the wire type.

7. Element according to Claim 5, wherein said winding (25) comprises a further sheet of conductive material.

8. Element according to any of the preceding claims, wherein it forms a series LC circuit (8).

9. Element according to any of the preceding claims, wherein it forms a resonant LC circuit (15).

10. Element according to any of the preceding claims, and forming an oscillating positive booster (29) connected between an alternating voltage generator (30) and a load (31).

11. Element according to any of the preceding claims, and forming a generator of pulsed magnetic fields (38) connected in parallel to a continuous voltage generator (40) and to a switch (39).

## Patentansprüche

1. Kapazitives und induktives Element (1) mit mindestens einem Paar von Platten (2, 3), die durch Lagen aus leitfähigem Material gebildet sind, die um einen magnetischen Kern (4) aus ferromagnetischem Material gewickelt sind und voneinander durch dielektrisches Material (5) getrennt sind, **dadurch gekennzeichnet, dass** es ferner umfasst eine Vielzahl erster Platten (27', 27", 27"'), die miteinander an einem Ende verbunden sind, und eine Vielzahl zweiter Platten (28', 28", 28'''), die miteinander an einem ihrer Enden verbunden sind, wobei jede der zweiten Platten zwischen einem benachbarten Paar erster Platten verläuft, und wobei die ersten und zweiten Platten in einer Spirale um den Kern gewickelt sind.

2. Kapazitives und induktives Element gemäß Anspruch 1, wobei die Platten (2, 3) in einer Spirale eine um die andere gewickelt sind.

3. Element gemäß Anspruch 1 oder 2, wobei der Kern (21) eine geschlossene Form aufweist.

4. Element gemäß Anspruch 1 oder 2, wobei der Kern (23) eine offene Form aufweist.

5. Element gemäß einem der vorherigen Ansprüche, wobei dieses eine Wicklung (25) aus leitfähigem Material umfasst, die um den magnetischen Kern (4) verläuft.

6. Element gemäß Anspruch 5, wobei die Wicklung vom Draht-Typ ist.

7. Element gemäß Anspruch 5, wobei die Wicklung (25) eine weitere Lage aus leitfähigem Material umfasst.

8. Element gemäß einem der vorherigen Ansprüche, wobei dieses einen Reihen-LC-Schaltkreis (8) bildet.

9. Element gemäß einem der vorherigen Ansprüche, wobei dieses einen Resonanz-LC-Kreis (15) bildet.

10. Element gemäß einem der vorherigen Ansprüche, das einen schwingenden Spannungserhöher (29) bildet, der zwischen einen Wechselspannungs-Generator (30) und eine Last (31) geschaltet ist.

11. Element gemäß einem der vorherigen Ansprüche, das einen Generator gepulster magnetischer Felder (38) bildet, der parallel mit einem Gleichspannungs-Generator (40) und einem Schalter (39) geschaltet ist.

## Revendications

1. Elément capacitif et inductif (1) comprenant au moins une paire de plaques (2, 3) formées par des feuilles d'un matériau conducteur enroulées autour d'un noyau magnétique (4) formé d'un matériau ferromagnétique et séparés 1' une de 1' autre par un matériau diélectrique (5), **caractérisé en ce qu'**il comporte en outre une pluralité de premières plaques (27', 27", 27"'), raccordées entre elles à leurs extrémités, une pluralité de secondes plaques (28', 28", 28"') raccordées entre elles par une de leurs extrémités, chacune desdites secondes plaques s'étendant entre une paire adjacente de premières plaques, et lesdites premières et secondes plaques étant enroulées en spirale autour dudit noyau.

2. Elément capacitif et inductif selon la revendication 1, dans lequel lesdites plaques (2, 3) sont enroulées en spirale, les unes autour des autres.

3. Elément selon la revendication 1 ou 2, dans lequel ledit noyau (21) possède une forme fermée.

4. Elément selon la revendication 1 ou 2, dans lequel ledit noyau (23) possède une forme ouverte.

5. Elément selon l'une quelconque des revendications précédentes, dans lequel il est prévu un enroulement (25) de matériau conducteur, qui s'étend autour dudit noyau magnétique (4).

6. Elément selon la revendication 5, dans lequel ledit enroulement est du type formé de fil.

7. Elément selon la revendication 5, selon lequel ledit enroulement (25) comprend une autre feuille d'un matériau conducteur.

8. Elément selon l'une quelconque des revendications précédentes, dans lequel cet élément forme un circuit LC série (8).

9. Elément selon l'une quelconque des revendications précédentes, dans lequel cet élément forme un circuit LC résonnant (15).

10. Elément selon l'une quelconque des revendications précédentes, et formant un amplificateur positif oscillant (29) connecté entre un générateur de tension alternative (30) et une charge (31).

11. Elément selon l'une quelconque des revendications précédentes et formant un générateur de champs magnétiques pulsés (38), connecté en parallèle avec un générateur de tension continue (40) et avec un interrupteur (39).
